# DEMANDE DE BREVET EUROPEEN

(11) **EP 1 813 177 A1**
(43) Date de publication de la demande: **01.08.2007**
(21) Numéro de dépôt: 06290162.4
(22) Date de dépôt: 26.01.2006
(51) Int. Cl.: A47J 43/28

(54) **Spatule a usage culinaire**

(71) Demandeur: Mastrad, 75012 Paris (FR)
(72) Inventeur: Lion, Mathieu, 75020 Paris (FR); Bignon, Lucas, 94230 Cachan (FR)
(74) Mandataire: Plaçais, Jean Yves

(57) **Abrégé**

La présente invention concerne une spatule comprenant une poignée de préhension (12) et une lame (14) qui prolonge la poignée de préhension (12), caractérisée par le fait que la lame (14) comporte au moins une tranche (34) légèrement incurvée, convexe, sur sa longueur, qui définit ainsi une corde (35) non alignée sur l'axe (O-O) de la poignée (12).

## Description

La présente invention concerne le domaine des outils culinaires.

Plus précisément, la présente invention concerne un outil du type spatule ou palette.

Le but de la présente invention est d'une manière générale de proposer un outil présentant des propriétés améliorées par rapport à l'état de la technique.

Des buts particuliers de la présente invention, sont notamment de proposer un outil léger, multi-usages, aisément lavable y compris en machine et résistant à une large plage de températures.

Un autre but important de la présente invention est de proposer un outil ergonomique, en particulier adapté pour permettre un retournement aisé d'éléments divers en cours de cuisson, tels que et non limitativement des crêpes, galettes, viande, grillages, poissons, etc...

Les buts précités sont atteints dans le cadre de la présente invention, grâce à une spatule comprenant une poignée de préhension et une lame qui prolonge la poignée, caractérisée par le fait que la lame comporte au moins une tranche légèrement incurvée, convexe, sur sa longueur, qui définit ainsi une corde non alignée sur l'axe de la poignée.

La présente invention concerne également un procédé de réalisation d'une telle spatule, caractérisé par le fait qu'il comprend au moins l'étape consistant à enrober une armature au moins semi-rigide, allongée, plane et au moins légèrement incurvée sur une tranche, à l'aide d'un matériau souple, tel qu'un matériau silicone, pour former une spatule comprenant une poignée et une lame qui prolonge la poignée.

D'autres caractéristiques, buts et avantages de la présente invention apparaîtront à la lecture de la description détaillée qui va suivre, et en regard des dessins annexés, donnés à titre d'exemple non limitatif et sur lesquels :
- la figure 1 représente une vue schématique latérale d'une spatule conforme à un mode de réalisation préférentiel de la présente invention,
- la figure 2 représente une vue similaire de la même spatule et illustre schématiquement le positionnement d'une armature interne à la lame de cette spatule,
- la figure 3 représente une vue schématique de la seule armature,
- la figure 4 représente schématiquement une vue sur la tranche de la même spatule, et
- les figures 5, 6 et 7 représentent schématiquement trois étapes successives de retournement d'une crêpe ou équivalent à l'aide d'une spatule conforme à la présente invention.

On a représenté sur les figures annexées, une spatule 10 comprenant une armature interne 20 intégralement revêtue de matériau silicone 30.

L'armature 20 et l'enrobage de matériau silicone 30 définissent en commun une spatule comprenant une poignée 12 prolongée par une lame 14.

Globalement la lame 14 présente une souplesse contrôlée.

Par ailleurs la lame 14 comporte au moins une tranche 34 légèrement incurvée, convexe, sur sa longueur, qui définit ainsi une corde 35 non alignée sur l'axe O-O de la poignée 12.

Plus précisément dans le cadre de la présente invention, les deux tranches de la lame 14 sont incurvées. Ainsi la seconde tranche 32 de la lame 14 est concave. Elle définit également une corde non alignée sur l'axe O-O de la poignée 12.

A titre d'exemple non limitatif, la corde 35 de la lame 14 est inclinée par rapport à l'axe O-O de la poignée 12 d'un angle α compris entre 10 et 40°, avantageusement de l'ordre de 20°.

L'armature 20 est composée d'une pièce plane, allongée, incurvée sur ses deux tranches longitudinales 22, 24. L'armature 20 a ainsi une géométrie générale en secteur de couronne. L'une 22 de ses tranches est concave. L'autre 24 de ses tranches, est convexe.

L'armature 20 est formée de préférence en métal, par exemple en acier ressort.

En variante, l'armature 20 peut être composée de tout matériau équivalent, par exemple en matériau thermoplastique dès lors que celui-ci présente une élasticité et une souplesse suffisantes pour autoriser une déformation adéquate de la lame 14.

De préférence, dans le cadre de la présente invention:
- l'épaisseur de l'armature 20 est comprise entre 1 et 2 mm,
- la longueur de l'armature 20 est comprise entre 20 et 30 cm, avantageusement de l'ordre de 25 cm,
- la largeur de l'armature 20 augmente progressivement, à partir de son extrémité adjacente à la poignée 12 ; typiquement l'armature 20 possède une largeur L1 comprise entre 10 et 20 mm, avantageusement de l'ordre de 13 mm à son extrémité adjacente à la poignée 12 et une largeur L2 comprise entre 15 et 30 mm, avantageusement de l'ordre de 18 mm à son extrémité opposée,
- l'armature défini sur sa tranche externe 24 convexe, une flêche F1 comprise entre 10 et 30 mm, avantageusement de l'ordre de 15 mm,
- le rayon moyen R1 de la tranche concave 22, est compris entre 40 et 60 cm, avantageusement de l'ordre de 50 cm.

En outre, les arêtes de l'armature 20 sont ébavurées pour supprimer toute arête vive risquant de blesser ou couper l'enrobage silicone 30.

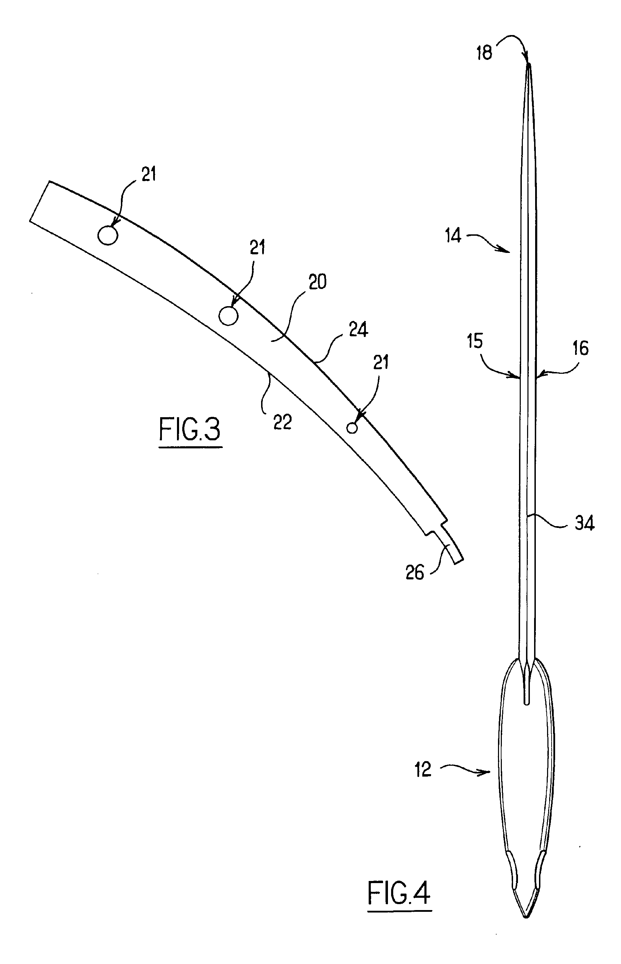

Comme on le voit sur la figure 3, à son extrémité de plus faible largeur, l'armature 20 qui a la forme générale d'un secteur de couronne de largeur variable, se prolonge par un insert ou doigt 26 de plus faible largeur, destiné à être encastré dans l'enrobage 30 au niveau de la partie formant poignée 12 pour assurer un lien et une continuité entre la partie lame 14 et la partie poignée 12.

L'enrobage 30 est de préférence réalisé en matériau silicone. Ce matériau est préféré en raison de sa résistance à la chaleur et de ses propriétés non abrasives. Cependant, le cas échéant, dans le cadre de la présente invention, l'enrobage 30 qui recouvre l'armature 20 pourrait être réalisé en d'autres matériaux, par exemple en matériau thermoplastique.

L'enrobage 30 définit d'une part, une poignée 12, et d'autre part, un revêtement recouvrant la totalité de l'armature 20.

La poignée 12 peut faire l'objet de nombreuses variantes de réalisation quant à sa géométrie. Elle est adaptée pour être ergonomique et tenue d'une main unique.

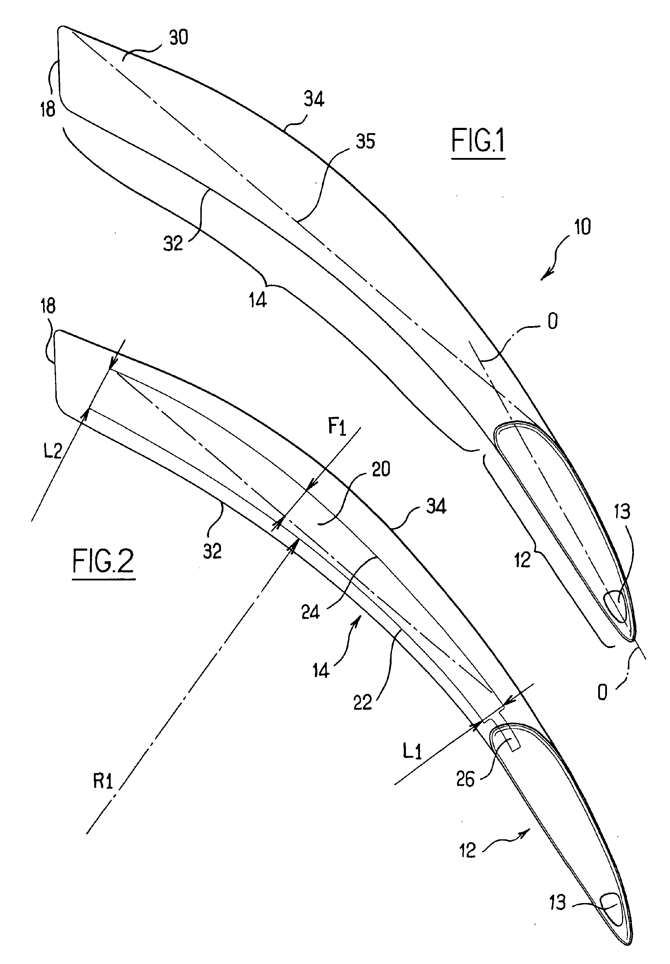

En pratique, la poignée 12 est formée d'une masse allongée, globalement centrée sur un axe médian O-O. Cependant la poignée 12 est typiquement légèrement incurvée pour prolonger globalement le contour de l'armature 20 et de la lame 14. La poignée 12 présente une section droite généralement ovale. La poignée présente de préférence un plan de symétrie parallèle au plan des figures 1 et 2 et orthogonal au plan de la figure 4, lequel plan de symétrie passe également par un plan de symétrie de la lame 14.

On notera que la poignée 12 possède de préférence un oeillet traversant 13 permettant l'accrochage ou le passage d'un cordon.

L'enrobage 30 définit au niveau de la lame 14, une enveloppe présentant globalement une géométrie similaire à celle de l'armature 20 précédemment décrite.

Ainsi, de préférence, la lame 14 est plane, allongée et incurvée sur ses deux tranches longitudinales 32, 34. La lame 14 a ainsi une géométrie générale en secteur de couronne. L'une 32 de ses tranches est concave. L'autre 34 de ses tranches, est convexe.

A titre préférentiel:
- l'épaisseur moyenne de la lame 14 est comprise entre 3 et 6 mm,
- la lame possède une longueur comprise entre 25 et 35 cm, avantageusement de l'ordre de 28 cm,
- la lame 14 a une largeur qui croît progressivement en éloignement de la poignée 12 ; typiquement la largeur la plus étroite de la lame 14, adjacente à la poignée 12 et référencée L3 est comprise entre 15 et 30 mm, avantageusement de l'ordre de 22 mm, tandis que sa plus grande largeur L4, située à proximité de son extrémité libre est comprise entre 20 et 50 mm, avantageusement de l'ordre de 40 mm (on notera que selon le mode de réalisation préférentiel, après une croissance en éloignement de la poignée 12, la largeur de la lame 14 décroît légèrement en direction de son extrémité libre),
- la flèche définie sur la tranche convexe 34 de la lame 14 est comprise entre 15 et 40 mm, avantageusement de l'ordre de 20 mm, et
- le rayon moyen de la tranche concave 32 de la lame 14 est compris entre 40 et 60 cm, avantageusement de l'ordre de 50 cm.

Les deux faces principales 15, 16, de la lame 14 convergent entre elles au niveau du bord radialement externe convexe 34 de la lame 14 pour définir à ce niveau un bord effilé. Il en est de même, de préférence, au niveau de l'extrémité de la lame 14 opposée à la poignée 12. A ce niveau, la lame 14 présente un bord d'extrémité 18 incliné à la fois par rapport à la tranche concave 32 et par rapport au bord externe convexe 34. En d'autres termes, y compris au niveau de ce bord d'extrémité 18 les faces principales 15, 16, de l'enrobage 30 convergent pour définir un bord effilé.

Grâce aux dispositions précitées, la spatule peut être utilisée pour trancher certains produits par ses tranches 18 et 34.

Plus précisément encore, de préférence, le bord 18 définit un angle obtus par rapport à la tranche concave 32 et un angle aigu par rapport à la tranche convexe externe 34. A ce niveau, le bord 18 est de préférence incliné de l'ordre de 50 à 80° par rapport au bord externe convexe 34, avantageusement de l'ordre de 70°, pour définir ainsi une pointe du côté convexe.

L'enrobage 30 peut être réalisé à l'aide de toute technique connue de l'homme de l'art, par exemple une réalisation de l'enrobage 30 en deux temps : un premier temps pendant lequel l'armature 20 est tenue par l'intermédiaire de l'insert 26 et une partie de l'enrobage 30 est réalisée sur l'armature 20 pour former la lame 14, puis un second temps pendant lequel l'enrobage 30 ainsi réalisé sur l'armature 20 est maintenu et la poignée 12 est réalisée.

En variante, on peut envisager de réaliser simultanément la poignée 12 et l'entourage de l'armature 20 en maintenant celle-ci de manière connue en soi, sous réserve d'obturer ultérieurement les éventuels passages ainsi formés à travers l'enveloppe 30 pour le maintien de l'armature 20.

Comme on l'a représenté sur la figure 3, en variante, l'armature 20 peut comporter des passages traversants 21 répartis sur sa longueur, pour permettre le passage de matériau d'enrobage 30 dans ces passages, propre à maintenir les deux toiles d'enrobage formées respectivement de part et d'autre de l'armature 20 grâce au pontage réalisé dans ces passages 21.

De préférence, la géométrie et la structure de l'armature 20 ainsi que la nature du matériau constituant l'enrobage 30 et la géométrie de cet enrobage 30 sont adaptées pour définir un certain point de faiblesse ou un point de flexion au niveau de la liaison entre la poignée 12 et la lame 14. Grâce à cette disposition, on assure que la flexion étant réalisée préférentiellement au niveau du point de jonction entre la poignée 12 et la lame 14, cette dernière reste globalement rectiligne lorsqu'elle est sollicitée transversalement à son plan moyen.

Par ailleurs, on notera que de préférence, l'évolution en largeur de la lame 14 et en particulier de l'armature 20 composant celle-ci, est adaptée de sorte que la courbure moyenne prise par la lame 14 soit toujours constante, à effort sensiblement constant appliqué par l'intermédiaire de la poignée 12, quelle que soit la zone de courbure.

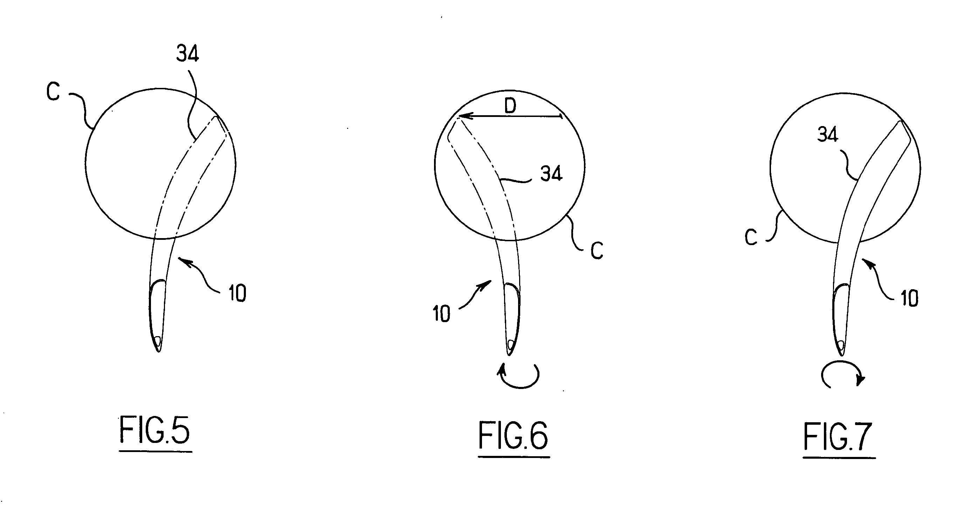

On a schématisé sur les figures 5, 6 et 7 annexées, le retournement d'une crêpe ou galette à l'aide d'une spatule conforme à la présente invention.

Sur la figure 5, on a schématisé une spatule 10 glissée sous une crêpe C ou équivalent, tranche effilée convexe 34 vers la gauche. On a schématisé sur la figure 6, la position de la spatule 10 après une rotation de 180° autour de l'axe longitudinal O-O de la poignée 12 au creux de la main d'un utilisateur. Cette rotation entraîne un déplacement de la lame 14, principalement de son extrémité. Plus précisément, au cours de cette rotation, l'extrémité de la spatule opposée à la poignée 12 se déplace, par rapport à sa position d'origine, d'une amplitude égale à deux fois la distance de porte à faux de l'extrémité de la spatule en regard de l'alignement sur l'axe O-O de la poignée 12 (en raison du fait que comme indiqué précédemment, selon l'invention, la corde, c'est-à-dire la ligne qui relie les deux extrémités de la tranche convexe 34 de la lame 14 n'est pas alignée sur l'axe O-O de la poignée 12. Sur la figure 6, ce déplacement de l'extrémité de la lame 14 est référencé D. L'homme de l'art comprendra qu'il est propice à appliquer un couple important sur l'objet C à retourner.

Enfin, la position de la spatule 10 obtenue après une rotation additionnelle de 180° autour de l'axe O-O de la poignée 12, amenant la spatule en superposition de l'élément C retourné, est représenté sur la figure 7.

L'homme de l'art comprendra que la spatule précédemment décrite conforme à la présente invention, répond à l'ensemble du cahier des charges indiqué dans le préambule. La spatule conforme à l'invention est en particulier souple, résiste à la chaleur et permet un retournement aisé de tout matériau cuisiné.

On notera que la spatule conforme à la présente invention présente un plan de symétrie général perpendiculaire au plan de la figure 4 et parallèle au plan des figures 1 et 2. La spatule conforme à la présente invention est ainsi ambidextre. Elle peut être utilisée de manière similaire en main gauche ou en main droite.

Bien entendu la présente invention n'est pas limitée au mode de réalisation particulier qui vient d'être décrit mais s'étend à toute variante conforme à son esprit.

A titre d'exemple non limitatif, la spatule conforme à la présente invention, peut être réalisée en un matériau unique, par exemple en matériau thermoplastique.

## Revendications

1. Spatule comprenant une poignée de préhension (12) et une lame (14) qui prolonge la poignée de préhension (12), **caractérisée par le fait que** la lame (14) comporte au moins une tranche (34) légèrement incurvée, convexe, sur sa longueur, qui définit ainsi une corde (35) non alignée sur l'axe (O-O) de la poignée (12).

2. Spatule selon la revendication 1, **caractérisée par le fait qu'**elle comporte une lame (14) dont les deux tranches longitudinales (32, 34) sont incurvées, l'une convexe, l'autre concave.

3. Spatule selon l'une des revendications 1 ou 2, **caractérisée par le fait qu'**elle comprend un enrobage (30) en matériau silicone.

4. Spatule selon l'une des revendications 1 ou 2, **caractérisée par le fait qu'**elle comprend un enrobage (30) en matériau thermoplastique.

5. Spatule selon l'une des revendications 1 à 4, **caractérisée par le fait qu'**elle comprend une armature interne (20) intégralement revêtue.

6. Spatule selon la revendication 5, **caractérisée par le fait que** l'armature interne (20) est réalisée en métal, par exemple en acier ressort.

7. Spatule selon la revendication 5, **caractérisée par le fait que** l'armature (20) est réalisée en matériau thermoplastique.

8. Spatule selon l'une des revendications 5 à 7, **caractérisée par le fait que** l'armature (20) est formée d'une pièce plane allongée et incurvée sur ses tranches (22, 24).

9. Spatule selon l'une des revendications 1 à 8, **caractérisée par le fait qu'**elle comprend une armature interne (20) possédant une épaisseur comprise entre 1 et 2 mm.

10. Spatule selon l'une des revendications 1 à 9, **caractérisée par le fait qu'**elle comprend une armature interne (20) possédant une longueur comprise entre 20 et 30 cm, typiquement de l'ordre de 25 cm.

11. Spatule selon l'une des revendications 1 à 10, **caractérisée par le fait qu'**elle comprend une armature interne (20) possédant une largeur qui croît progressivement à partir de son extrémité adjacente à la poignée (12).

12. Spatule selon l'une des revendications 1 à 11, **caractérisée par le fait qu'**elle comprend une armature interne (20) présentant une largeur, adjacente à la poignée (12) comprise entre 10 et 20 mm, typiquement de l'ordre de 13 mm et une largeur à son extrémité opposée comprise entre 15 et 30 mm, typiquement de l'ordre de 18 mm.

13. Spatule selon l'une des revendications 1 à 12, **caractérisée par le fait qu'**elle comprend une armature interne (20) possédant une flèche comprise entre 10 et 30 mm, typiquement de l'ordre de 15 mm.

14. Spatule selon l'une des revendications 1 à 13, **caractérisée par le fait qu'**elle comprend une armature interne (20) possédant un rayon moyen au niveau d'un bord concave (22) compris entre 40 et 60 cm, typiquement de l'ordre de 50 cm.

15. Spatule selon l'une des revendications 1 à 14, **caractérisée par le fait qu'**elle comprend une armature interne (20) possédant un insert (26) adapté pour être encastré dans la poignée (12).

16. Spatule selon l'une des revendications 1 à 15, **caractérisée par le fait qu'**elle comprend une enveloppe externe (30) globalement plane allongée incurvée sur ses tranches.

17. Spatule selon l'une des revendications 1 à 16, **caractérisée par le fait qu'**elle comprend une lame (14) de largeur progressivement croissante à partir de son extrémité adjacente à la poignée (12).

18. Spatule selon l'une des revendications 1 à 17, **caractérisée par le fait qu'**elle comprend une lame (14) dont la largeur croît en éloignement de la poignée (12) puis tend à décroître légèrement en direction de son extrémité libre.

19. Spatule selon l'une des revendications 1 à 17, **caractérisée par le fait que** la largeur la plus étroite de la lame (14), adjacente à la poignée (12) est comprise entre 15 et 30 mm, avantageusement de l'ordre de 22 mm, tandis que sa plus grande largeur située à proximité de son extrémité libre est comprise entre 20 et 50 mm, avantageusement de l'ordre de 40 mm.

20. Spatule selon l'une des revendications 1 à 19, **caractérisée par le fait que** l'épaisseur de la lame (14) est comprise entre 3 et 6mm.

21. Spatule selon l'une des revendications 1 à 20, **caractérisée par le fait que** la longueur de la lame (14) est comprise entre 25 et 35 cm, avantageusement de l'ordre de 28 cm.

22. Spatule selon l'une des revendications 1 à 21, **caractérisée par le fait que** la lame (14) définit une flèche comprise entre 15 et 40 mm, avantageusement de l'ordre de 20 mm.

23. Spatule selon l'une des revendications 1 à 22, **caractérisée par le fait que** la lame (14) définie au niveau de sa tranche concave un rayon moyen compris entre 40 et 60 cm, avantageusement de l'ordre de 50 cm.

24. Spatule selon l'une des revendications 1 à 23, **caractérisée par le fait que** les faces principales (15, 16) de la lame (14) convergent au moins sur l'un de ses bords pour définir un bord effilé semi tranchant (34).

25. Spatule selon la revendication 24, **caractérisée par le fait que** le bord effilé (34) est défini sur la tranche convexe de la lame (14).

26. Spatule selon l'une des revendications 1 à 25, **caractérisée par le fait qu'**elle possède un bord effilé (18) opposé à la poignée (12).

27. Spatule selon l'une des revendications 1 à 26, **caractérisée par le fait que** le bord d'extrémité (18) opposé à la poignée (12) est incliné de 50 à 80°, avantageusement de l'ordre de 70° par rapport au bord externe convexe (34) de la lame (14).

28. Spatule selon l'une des revendications 1 ou 2 et 16 à 27, **caractérisée par le fait qu'**elle est réalisée en un matériau unique.

29. Spatule selon la revendication 28, **caractérisée par le fait qu'**elle est réalisée en matériau thermoplastique.

30. Spatule selon l'une des revendications 1 à 29, **caractérisée par le fait que** la corde (35) de la tranche convexe (35) de la lame (14) est inclinée d'une angle (α) compris entre 10 et 40°, avantageusement de l'ordre de 20°, par rapport à l'axe O-O de la poignée (12).

31. Spatule selon l'une des revendications 1 à 30, **caractérisée par le fait qu'**elle comprend des passages traversants (21) dans une armature interne (20).

32. Spatule selon l'une des revendications 1 à 31, **caractérisée par le fait qu'**elle présente un point de faiblesse au niveau de la liaison entre la poignée (12) et la lame (14).

33. Spatule selon l'une des revendications 1 à 32, **caractérisée par le fait que** l'évolution de largeur de la lame (14) est adaptée pour définir une courbure sensiblement constante de la lame, à effort constant appliqué par la poignée (12) quelle que soit la zone de courbure de la lame (14).

34. Spatule selon l'une des revendications 1 à 33, **caractérisée par le fait qu'**elle présente un plan de symétrie longitudinal.

35. Procédé de réalisation d'une spatule, **caractérisé par le fait qu'**il comprend au moins l'étape consistant à enrober une armature (20) allongée, plane, au moins semi rigide et au moins légèrement incurvée sur une tranche, à l'aide d'un matériau souple (30) tel qu'un matériau silicone, pour former une spatule comprenant une poignée (12) et une lame (14) qui prolonge la poignée (12).

36. Procédé selon la revendication 35, **caractérisé par le fait que** la lame (14) comporte au moins une tranche (34) légèrement incurvée, convexe, sur sa longueur, qui définit ainsi une corde (35) non alignée sur l'axe (O-O) de la poignée (12).

37. Procédé selon l'une des revendications 35 ou 36, **caractérisé par le fait que** la lame (14) comporte deux tranches longitudinales (32, 34) incurvées, l'une convexe, l'autre concave.
